# EUROPEAN PATENT APPLICATION

(11) **EP 4 586 382 A1**
(43) Date of publication of application: **16.07.2025**
(21) Application number: 23862820.0
(22) Date of filing: 28.07.2023
(51) Int. Cl.: H01M 50/291, H01M 50/213, H01M 50/342

(54) **BATTERY PACK**

(30) Priority: 07.09.2022 JP 2022142095
(71) Applicant: Panasonic Energy Co., Ltd., Osaka 570-8511 (JP)
(72) Inventor: WASHIDA, Takeshi, Kadoma-shi, Osaka 571-0057 (JP)
(74) Representative: Novagraaf International SA
(86) International application number: PCT/JP2023/027787
(87) International publication number: WO 2024/053277

(57) **Abstract**

As a battery pack in which battery blocks are stacked in multiple layers, a battery pack is provided the thickness of which can be reduced even while space for gas ducts is secured. Battery pack 100 includes: first battery block 20A and second battery block 20B each including a plurality of secondary battery cells 1; spacer 30 disposed between first battery block 20A and second battery block 20B stacked; and outer covering case 10 that stores first battery block 20A, second battery block 20B, and spacer 30. Spacer 30 separates first battery block 20A and second battery block 20B from each other and includes partition 32 that defines first space 31A facing first battery block 20A and second space 31B facing second battery block 20B. Partition 32 includes fracture region 33 at least in regions facing secondary battery cell 1.

## Description

### Technical Field

The present disclosure relates to battery packs.

### Background Art

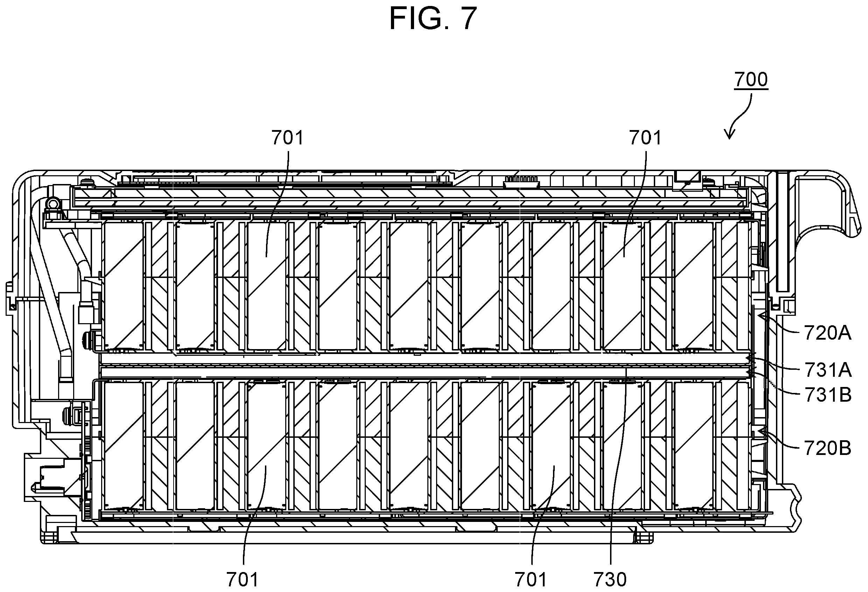

In electrical devices that use a rechargeable secondary battery such as a lithium-ion secondary battery, a battery pack is used in which more than one secondary battery cell is stored in an outer covering case so that the secondary battery can be replaced (for example, Patent Literature (PTL) 1). Various electrical devices such as electric carts and power tools are driven by a battery pack. There is a demand for a battery pack with increased output and capacity for an electrical device to be driven; as a result, there is a tendency that a battery pack uses more secondary battery cells. Therefore, battery pack 700 is used in which battery blocks each including secondary battery cells 701 arranged side by side are stacked vertically, as illustrated in the cross-sectional view in Fig. 7. Spacer 730 made of resin is provided between upper battery block 720A and lower battery block 720B. Meanwhile, there is also a demand for a battery pack reduced in size and weight in consideration of portability, space for installation, and so on.

There are cases where pressure inside an outer covering can of a secondary battery cell may rise to a high level due to an anomaly. Therefore, a safety valve is provided on the outer covering can, and the secondary battery cell is configured so as to open the safety valve in reaction to the pressure rise and thereby exhaust a high-temperature, high-pressure gas from the outer covering can. Conventional battery packs include a gas duct such that if a gas is exhausted from a secondary battery cell into an outer covering case, the gas can be safely exhausted out of the outer covering case. For example, in battery pack 700 illustrated in Fig. 7, gas ducts 731A, 731B through which a gas exhausted from secondary battery cell 701 is guided are formed on spacer 730 made of resin.

Since the temperature, pressure, etc., of an exhaust gas are high depending on specifications such as the capacity of a secondary battery cell, a gas duct through which the gas is exhausted is designed to have a certain inner height from a safety perspective. Therefore, in a configuration such as that illustrated in Fig. 7 in which battery blocks 720A, 720B are stacked in two layers, gas ducts 731A, 731B, which are disposed between battery block 720A and battery block 720B, also need to be formed in two layers for the respective battery blocks; as a result, the gas ducts are bulky and the external size of the battery pack is large, which is problematic.

### Citation List

### Patent Literature

PTL 1: Unexamined Japanese Patent Publication No. 2013-084558

### Summary of Invention

### Technical Problem

An object of the present disclosure is to provide a battery pack in which battery blocks are stacked in multiple layers and the thickness of which can be reduced even while space for gas ducts is secured.

### Solution to Problem

A battery pack according to one aspect of the present invention includes: a first battery block and a second battery block each including a plurality of secondary battery cells; a spacer disposed between the first battery block and the second battery block stacked; and an outer covering case that stores the first battery block, the second battery block, and the spacer. The spacer separates the first battery block and the second battery block from each other and includes a partition that defines a first space facing the first battery block and a second space facing the second battery block. The partition includes fracture regions at least in regions facing the plurality of secondary battery cells.

### Advantageous Effects of Invention

In the battery pack according to one aspect of the present invention, if a high-temperature, high-pressure gas is released from a secondary battery cell, it is possible to place the first space and the second space in communication by melting and penetrating the fracture region of the partition so that the gas can be guided to a larger space. As a result, each of the first space and the second space can be formed having a reduced thickness, which can contribute to a reduction in the thickness of the battery pack.

### Brief Description of Drawings

[Fig. 1] Fig. 1 is a perspective view illustrating a battery pack according to Embodiment 1.
[Fig. 2] Fig. 2 is an exploded perspective view of the battery pack illustrated in Fig. 1.
[Fig. 3] Fig. 3 is an exploded perspective view with an enlarged view of a main part of the battery module illustrated in Fig. 2.
[Fig. 4] Fig. 4 is an exploded perspective view with an enlarged view of a main part of the battery module illustrated in Fig. 3, as viewed obliquely from below.
[Fig. 5] Fig. 5 is a vertical cross-sectional view of the battery pack illustrated in Fig. 1, taken along line V-V.
[Fig. 6] Fig. 6 is an enlarged cross-sectional view of a main part of the battery pack illustrated in Fig. 5.
[Fig. 7] Fig. 7 is a cross-sectional view illustrating a battery pack according to a comparative example.
[Fig. 8] Fig. 8 is an enlarged cross-sectional view of a main part of the battery pack illustrated in Fig. 7.
[Fig. 9] Fig. 9 is a further enlarged cross-sectional view of a main part of the battery pack illustrated in Fig. 6.
[Fig. 10] Fig. 10 illustrates the battery pack illustrated in Fig. 9 in which thermal runway occurs.
[Fig. 11] Fig. 11 is a cross-sectional view illustrating a route through which a high-pressure gas is exhausted from an outer covering case in the battery pack illustrated in Fig. 5.
[Fig. 12] Fig. 12 is an enlarged cross-sectional view of a battery holder of a battery pack according to a variation.
[Fig. 13] Fig. 13 is an enlarged perspective view illustrating a battery holder of a battery pack according to Embodiment 2.
[Fig. 14] Fig. 14 is an enlarged perspective view illustrating a battery holder of a battery pack according to Embodiment 3.

### Description of Embodiments

Embodiments of the present invention may be specified by configurations, features, and the like indicated below.

As a battery pack according to another aspect of the present invention, in the above aspect, a positioning protrusion that abuts the first battery block and a positioning protrusion that abuts the secondary battery block may be integrally formed on an inner surface of a side wall of the spacer.

Furthermore, in a battery pack according to another aspect of the present invention, in any of the above aspects, an outer covering can of each of the plurality of secondary battery cells may be cylindrical, and a safety valve may be provided on one end surface of the outer covering can that is cylindrical, and each of the fracture regions may be configured to, when the safety valve opens and a high-temperature gas is released, fracture due to the high-temperature gas to cause penetration of the partition.

Furthermore, in a battery pack according to another aspect of the present invention, in any of the above aspects, the fracture region may be formed by reducing a thickness of a region of the partition that faces the secondary battery cell.

Furthermore, in a battery pack according to another aspect of the present invention, in any of the above aspects, an end surface of the secondary battery cell included in the first battery block and an end surface of the secondary battery cell included in the secondary battery block may be arranged facing each other with the spacer therebetween.

Furthermore, in a battery pack according to another aspect of the present invention, in any of the above aspects, the safety valve may be provided on one of the end surface of the secondary battery cell in the first battery block and the end surface of the secondary battery cell in the secondary battery block that face each other with the spacer therebetween.

Furthermore, in a battery pack according to another aspect of the present invention, in any of the above aspects, one of the end surface of the secondary battery cell in the first battery block and the end surface of the secondary battery cell in the secondary battery block that face each other with the spacer therebetween may be a positive electrode, and the other may be a negative electrode.

Furthermore, in a battery pack according to another aspect of the present invention, in any of the above aspects, each of the fracture regions may be circular.

Furthermore, in a battery pack according to another aspect of the present invention, in any of the above aspects, each of the fracture regions may be from 0.1 mm to 1 mm in thickness.

Furthermore, in a battery pack according to another aspect of the present invention, in any of the above aspects, the partition may be formed to make a height of the first space and a height of the second space substantially equal.

Hereinafter, exemplary embodiments of the present invention will be described with reference to the drawings. Note that the exemplary embodiments described below are mere illustrations for embodying the technical idea of the present invention; the present invention is not limited to those described below. The present specification should not be considered limiting in any way the members recited in the claims to the members indicated in the exemplary embodiments. In particular, the dimensions, materials, shapes, relative positioning, etc., of components indicated in the exemplary embodiments are not intended to limit the scope of the present invention thereto, but are merely exemplary, unless specifically noted otherwise. Note that there are cases where the size, positional relationship, etc., of the members illustrated in the drawings are exaggerated for clarity of explanation. Furthermore, in the following description, the same name and reference signs indicate the same or similar members, and detailed description thereof will be omitted, as appropriate. Moreover, the elements included in the present invention may be realized by forming two or more elements out of the same member so that one member functions as two or more elements or by allocating the functions of one member to two or more members.

The battery pack according to the present invention can be used as a power supply for driving movable bodies such as an electric cart, an electric scooter, and an electric assisted bicycle, or as a power supply for radios and a power supply for portable electrical devices such as an electric cleaner and an electric tool, or as a backup power supply of a server for stationary energy storage usage or a power supply device for homes, offices, and factories, and can also be used as a power supply for driving vehicles such as a hybrid vehicle and an electric vehicle, for example. Hereinafter, a battery pack to be used as a power supply for driving an electric cart will be described as one embodiment of the present invention.

### [Embodiment 1]

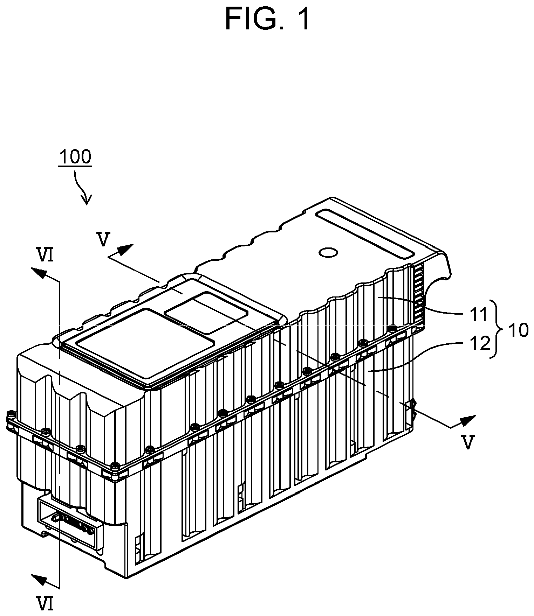

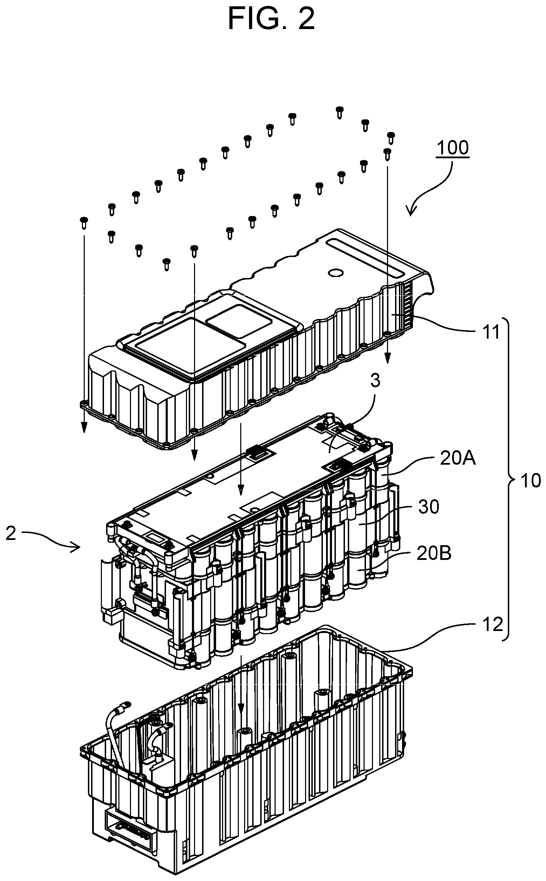

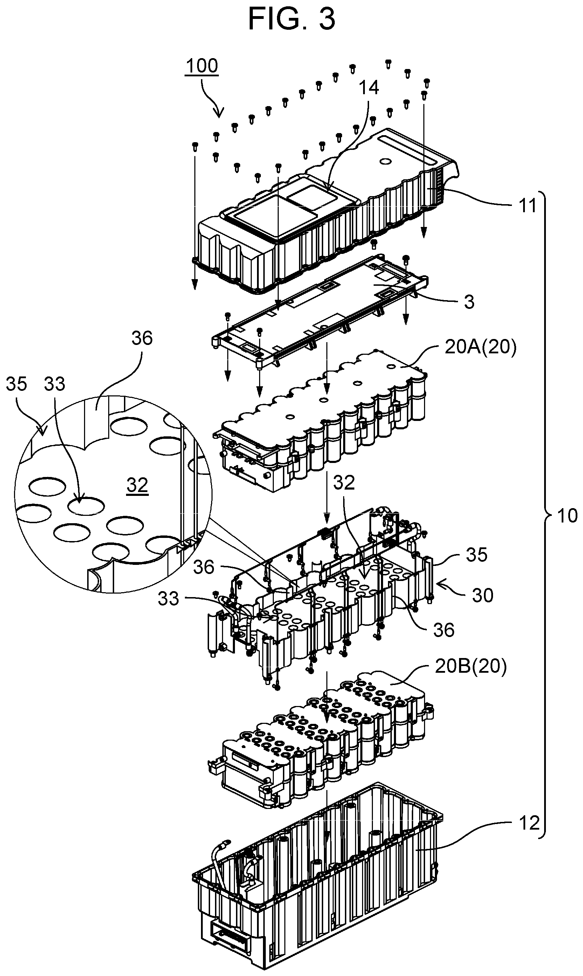

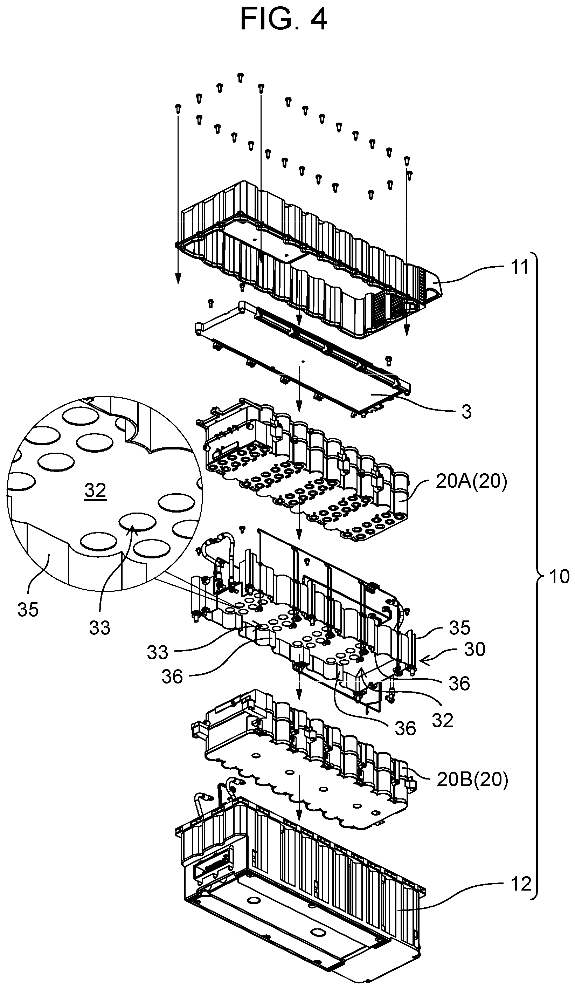

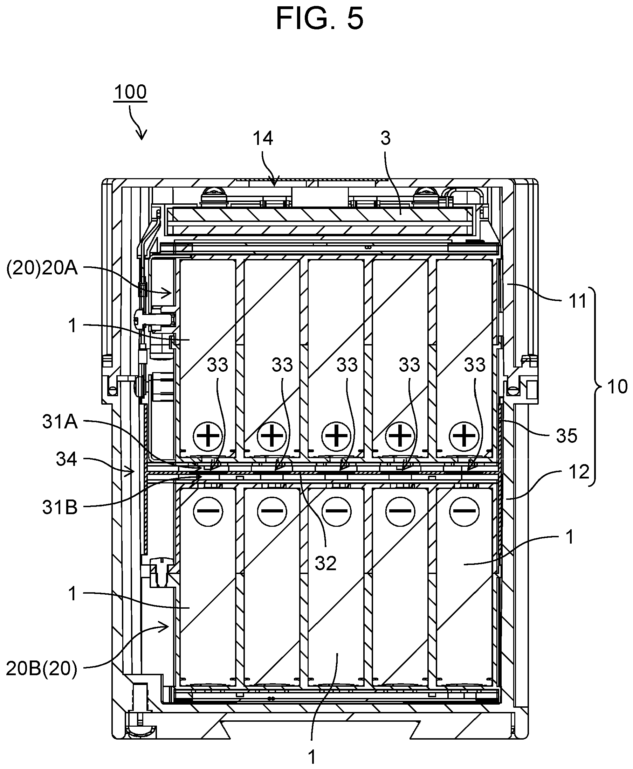

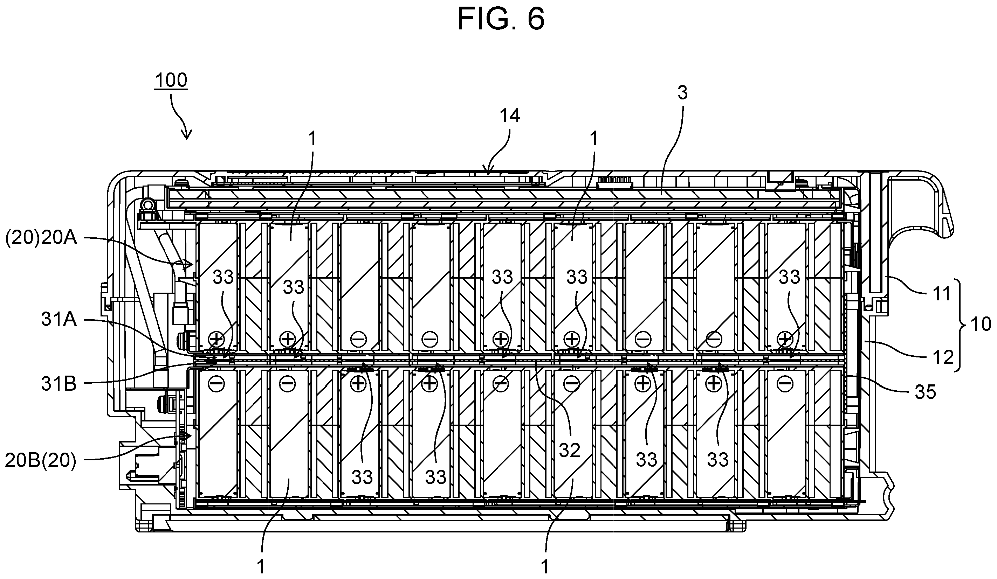

Fig. 1 to Fig. 6 illustrate battery pack 100 according to Embodiment 1 of the present invention. In these figures, Fig. 1 is a perspective view illustrating battery pack 100 according to Embodiment 1, Fig. 2 is an exploded perspective view of battery pack 100 illustrated in Fig. 1, Fig. 3 is an exploded perspective view with an enlarged view of a main part of battery module 2 illustrated in Fig. 2, Fig. 4 is an exploded perspective view with an enlarged view of a main part of battery module 2 illustrated in Fig. 3, as viewed obliquely from below, Fig. 5 is a vertical cross-sectional view of battery pack 100 illustrated in Fig. 1, taken along line V-V, and Fig. 6 is an enlarged cross-sectional view of a main part of battery pack 100 illustrated in Fig. 5. Battery pack 100 illustrated in these figures include outer covering case 10, battery module 2, and circuit board 3.

### <Outer Covering Case 10>

Outer covering case 10 stores battery module 2, circuit board 3, and the like. The exterior of this outer covering case 10 is box-shaped, as illustrated in Fig. 1. Outer covering case 10 is divided in half as upper case 11 and lower case 12, for example. This outer covering case 10 is made of a highly insulating material that is, for example, a resin such as polycarbonate and a polycarbonate-acrylonitrile butadiene styrene (PC-ABS) alloy. Furthermore, an inner space that stores battery module 2, circuit board 3, and the like is provided inside outer covering case 10, as illustrated in the exploded perspective view in Fig. 2.

### <Battery Module 2>

Battery module 2, which is also referred to as a core pack, includes a plurality of battery blocks 20. In the example illustrated in Fig. 3, Fig. 4, and Fig. 5, battery module 2 includes first battery block 20A and second battery block 20B. Each of first battery block 20A and second battery block 20B includes a plurality of secondary battery cells 1. The plurality of secondary battery cells 1 are connected in series or parallel, for example, via a lead plate. The number of secondary battery cells connected in series or parallel can be set arbitrarily according to required specifications. First battery block 20A and second battery block 20B preferably use the same number of secondary battery cells 1. Furthermore, the number of secondary battery cells connected in series or parallel in each of first battery block 20A and second battery block 20B is preferably set equal. In the example illustrated in Fig. 3 and Fig. 4, each battery block 20 uses a total of 90 secondary battery cells 1 by connecting nine secondary battery cells 1 in series and ten secondary battery cells 1 in parallel; however, this configuration is not limiting.

Each battery block 20 includes the plurality of secondary battery cells 1. For example, battery block 20 includes a battery holder that stores secondary battery cells 1. The battery holder includes a plurality of storage cylinders in which secondary battery cells 1 are stored separately. This battery holder can be made of a resin such as polycarbonate, which has excellent insulation properties. Note that in the example illustrated in Fig. 3, each battery block 20 includes 90 secondary battery cells 1, but the number of secondary battery cells included in each battery block is not limited to this number and can be set to any number. Furthermore, when the battery holder is standardized, battery blocks 20 can be easily recycled. Note that the number of secondary battery cells in a part of the battery blocks may be changed.

Note that in the example described with reference to Fig. 3, etc., the battery block includes two blocks, namely, first battery block 20A and second battery block 20B, but it goes without saying that in the present invention, the number of battery blocks is not limited to two and may be three or more.

### <Secondary Battery Cell 1>

As one or more secondary battery cells 1, prismatic or cylindrical secondary battery cells can be used. In the example illustrated in Fig. 3 and Fig. 4, cylindrical secondary battery cells 1 are mounted to assume a standing posture and arranged in a staggered pattern when in use. Note that the number, positions, etc., of secondary battery cells 1 are not limited to those in this example and may be set to any number, positions, etc., as appropriate. Each secondary battery cell 1 includes positive and negative electrodes. The positive and negative electrodes are preferably provided on one end surface of secondary battery cell 1. Known secondary batteries such as lithium-ion secondary batteries, nickel-hydrogen batteries, and nickel-cadmium batteries can be used, as appropriate, as secondary battery cells 1.

### <Safety Valve>

Furthermore, a safety valve is provided on the outer covering can of secondary battery cell 1. The safety valve opens in reaction to an increase in the internal pressure of the outer covering can and releases an internal gas of the outer covering can to the outside.

### <Circuit Board 3>

Each of first battery block 20A and second battery block 20B is connected to circuit board 3 via the lead plate. On circuit board 3, mounted are a charging/discharging circuit that charges and discharges secondary battery cells 1 and a protection circuit that monitors the voltage, temperature, etc., of secondary battery cells 1 and cuts off an electric current when an anomaly occurs, for example. Circuit board 3 is formed from a glass epoxy board or the like.

### <Spacer 30>

As illustrated in Fig. 5 and Fig. 6, spacer 30 is interposed between first battery block 20A and second battery block 20B. Spacer 30 is made of a highly insulating material that is, for example, a resin such as polycarbonate and a PC-ABS alloy.

On the inner surface of side wall 35 of spacer 30, positioning protrusion 36 that abuts first battery block 20A and positioning protrusion 36 that abuts second battery block 20B are integrally formed, and first battery block 20A and second battery block 20B are arranged in layers with spacing therebetween as positioning protrusions 36 corresponding to first battery block 20A and second battery block 20B that are inserted through both upper and lower openings surrounded by side wall 35 of spacer 30 abut first battery block 20A and second battery block 20B.

### <Partition 32>

Spacer 30 includes partition 32 that defines first space 31A facing first battery block 20A and second space 31B facing second battery block 20B. Partition 32 is preferably formed such that first space 31A and second space 31B are substantially equal in height. This partition 32 is preferably formed integrally with spacer 30.

Separating first battery block 20A and second battery block 20B from each other by spacer 30 is advantageous in that first battery block 20A and second battery block 20B are located at a constant distance from each other, and defining first space 31A and second space 31B by partition 32 formed on spacer 30 is advantageous in that partition 32 is placed at an appropriate distance from an opposing surface of each battery block.

### <Fracture Region 33>

Furthermore, fracture region 33 is provided in a region of partition 32 that faces secondary battery cell 1. With this configuration, if a high-temperature, high-pressure gas is released from a secondary battery cell, it is possible to place first space 31A and second space 31B in communication by fracturing and penetrating fracture region 33 of partition 32 so that the gas can be guided to a larger space. As a result, each of first space 31A and second space 31B can be formed having a reduced thickness, which can contribute to a reduction in the thickness of the battery pack.

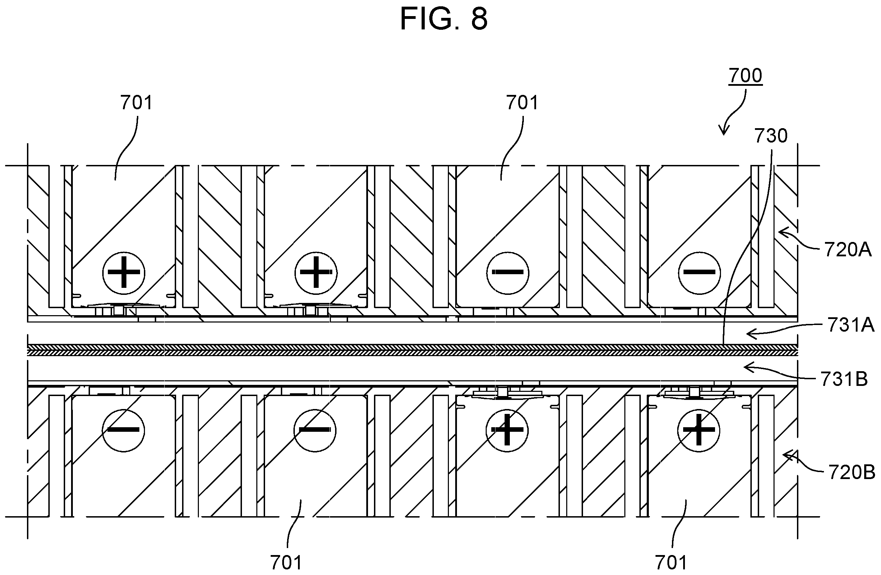

For the sake of comparison, battery pack 700 illustrated in the cross-sectional view in Fig. 7 will be referred to in the following description. In battery pack 700 illustrated in Fig. 7, spacer 730 made of resin is provided between upper battery block 720A and lower battery block 720B. As illustrated in the enlarged cross-sectional view in Fig. 8, spacer 730 divides a gas duct into two parts and thus, upper battery block gas duct 731A and lower battery block gas duct 731B are formed. As a result, even when the safety valve on secondary battery cell 701 in any of upper battery block 720A and lower battery block 720B opens and a high-temperature, high-pressure gas is exhausted, the gas can be guided along the exhaust path in each of upper battery block gas duct 731A and lower battery block gas duct 731B.

However, depending on the specifications of secondary battery cell 701, the ejected gas may have high temperature, pressure, etc., and since the heat resistance of spacer 730 made of resin is generally insufficient, it is necessary to ensure that gas ducts 731A, 731B have a certain height. Therefore, when battery blocks are stacked in two or more layers, a gas duct needs to be provided in each of the battery blocks and the overall height increases for that part, resulting in a larger battery pack, which is problematic.

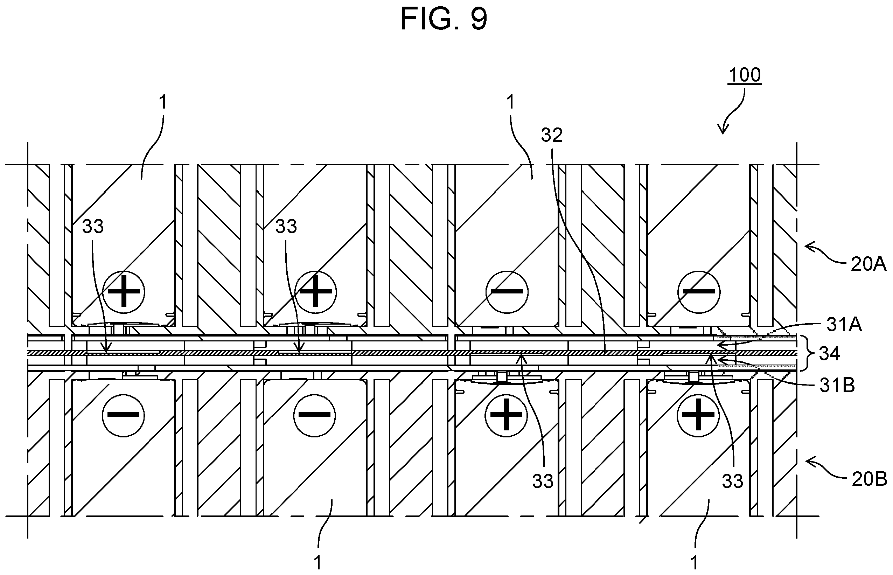

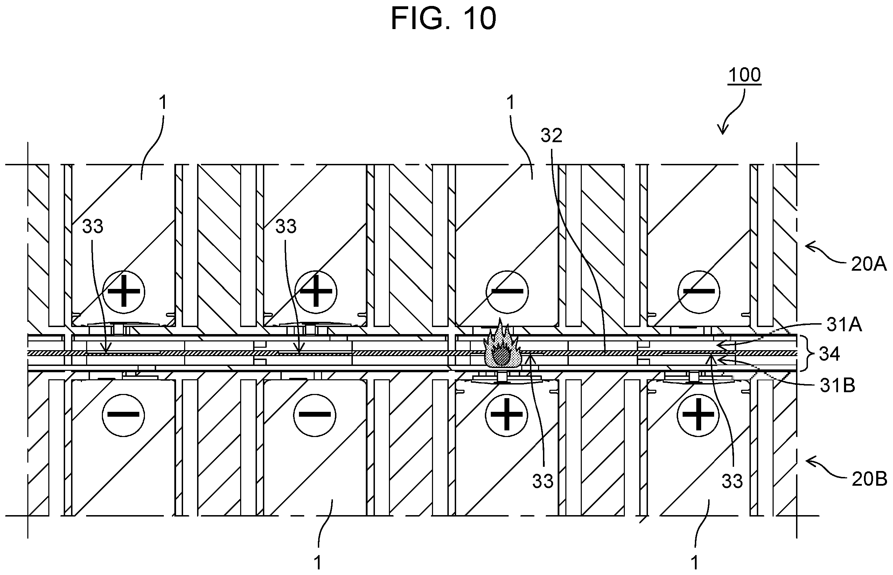

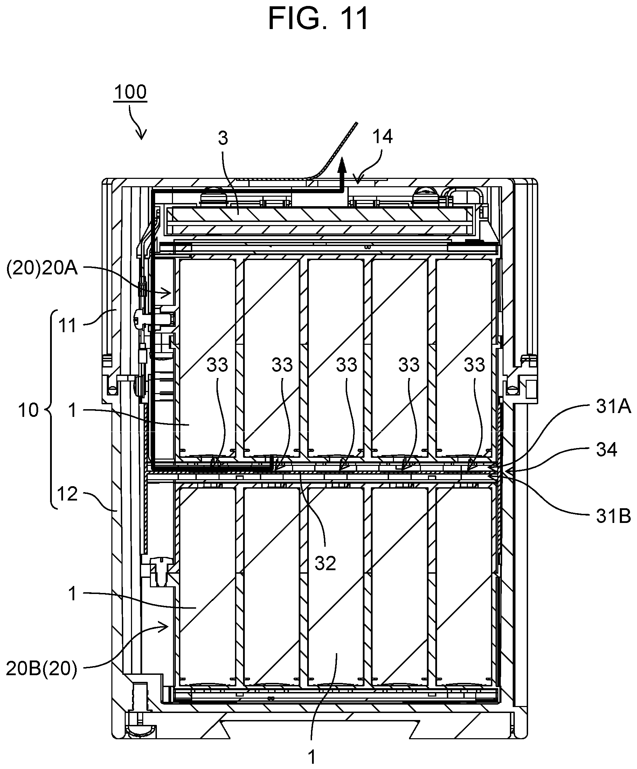

In contrast, in battery pack 100 according to the present exemplary embodiment, spacer 30 is interposed between first battery block 20A and second battery block 20B as illustrated in the exploded perspective view in Fig. 3, partition 32 is provided on spacer 30 as illustrated in the enlarged cross-sectional view in Fig. 6, and thus first space 31A facing first battery block 20A and second space 31B facing second battery block 20B are defined. Furthermore, as illustrated in the enlarged views of the main parts in Fig. 3 and Fig. 6, fracture region 33 is formed in a region of partition 32 that faces secondary battery cell 1. Fracture region 33 is formed by reducing the thickness of a part of partition 32 that faces secondary battery cell 1, as illustrated in the enlarged view illustrated in Fig. 9. If the safety valve on any of the secondary battery cells opens due to an anomaly and a high-temperature, high-pressure gas is blown out from the safety valve as illustrated in Fig. 10, thin fracture region 33 melts and fractures due to the high heat and pressure, and thus partition 32 is broken through. In the example illustrated in Fig. 10, second space 31B for second battery block 20B in the lower layer and first space 31A for first battery block 20A in the upper layer are placed in communication through fracture region 33. As a result, the high-temperature, high-pressure gas blown out of secondary battery cell 1 is guided through not only second space 31B, but also first space 31A. In other words, a region defined by first space 31A in addition to second space 31B is used as gas guiding path 34. With this configuration, the height of gas guiding path 34 does not need to be the height of two paths provided in the respective battery blocks, but it is sufficient that the height of gas guiding path 34 required in each battery block be a half of that originally required, and the total height of gas guiding path 34 be equivalent to the height of the path originally provided in one battery block, meaning that the battery pack can be reduced in height. The high-temperature, high-pressure gas guided to gas guiding path 34, which is first space 31A and second space 31B combined, is guided to gas guiding path 34 formed in outer covering case 10 and ultimately exhausted to the outside from gas exhaust hole 14 formed in a surface of outer covering case 10, as illustrated in the cross-sectional view in Fig. 11.

Furthermore, an end surface of secondary battery cell 1 included in first battery block 20A and an end surface of secondary battery cell 1 included in secondary battery block 20B are desirably arranged facing each other with spacer 30 therebetween. Moreover, a safety valve is desirably provided on one of the end surface of secondary battery cell 1 in first battery block 20A and the end surface of secondary battery cell 1 in second battery block 20B that face each other with spacer 30 therebetween. For example, it is desirable that one of the end surface of the secondary battery cell in first battery block 20A and the end surface of the secondary battery cell in second battery block 20B be a positive electrode and the other be a negative electrode. Generally, a safety valve is provided on one of a positive electrode and a negative electrode, meaning that when the safety valve is placed on only one of the electrode opposing surfaces, it is possible to ensure safety by avoiding a situation in which the high-temperature, high-pressure gas is ejected from the both end surfaces.

Partition 32 is formed having a recess on the side on which the safety valve is provided, and thus fracture region 33 is formed. For example, when the safety valve is provided on the positive electrode side of secondary battery cell 1, the side of partition 32 that faces the positive electrode is formed having a reduced thickness to function as fracture region 33, as illustrated in the enlarged cross-sectional view in Fig. 9. As a result, the ejected gas is collected in the recess having the reduced thickness, making it easy for fracture region 33 to fracture.

For example, when secondary battery cells 1 are arranged in each battery block 20 so that the positive electrodes and the negative electrodes appear alternately every two secondary battery cells 1 in the upper and lower layers as illustrated in Fig. 6, fracture regions 33, which are formed on partition 32, are also formed so as to appear alternately every two columns on partition 32 as illustrated in the enlarged views of the main parts illustrated in Fig. 3, Fig. 4, etc.

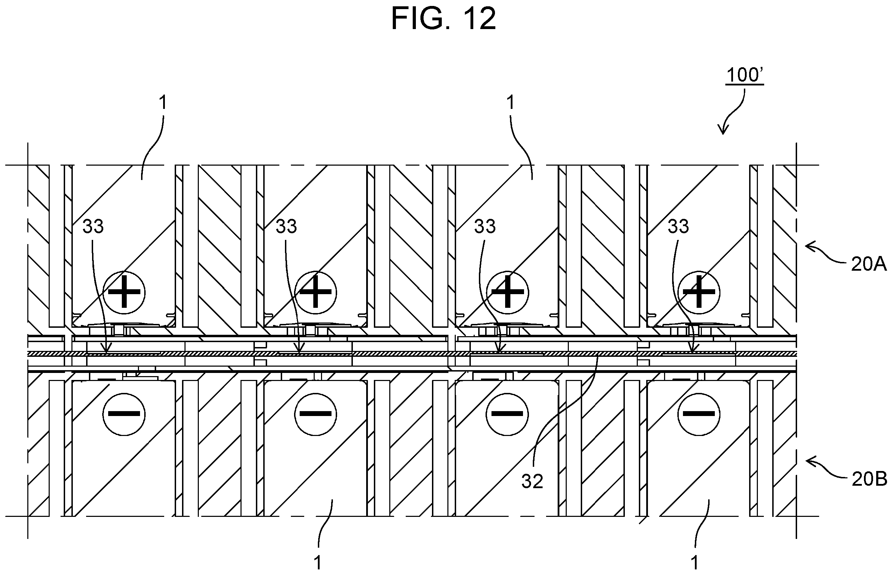

Furthermore, when secondary battery cells 1 are arranged so that each of the positive electrode and the negative electrode appears on the same side as in battery pack 100' illustrated in Fig. 12, fracture region 33 in the form of a recess is formed on the side of partition 32 that faces a surface, such as a positive electrode surface, on which the safety valve is provided.

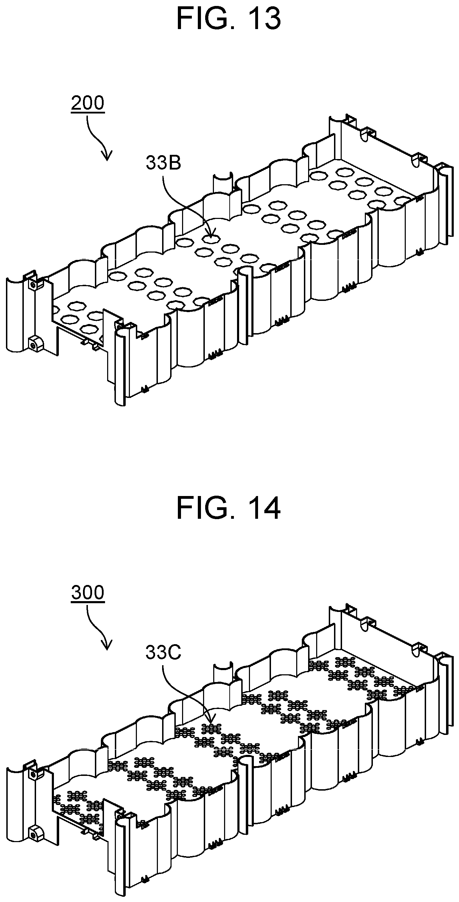

The shape of fracture region 33 is circular in the example illustrated in Fig. 3, Fig. 4, etc., but this is not limiting. For example, in battery pack 200 according to Embodiment 2 illustrated in Fig. 13, fracture region 33B is octagonal in shape. Other possible shapes may include polygons such as squares and hexagons and may also include ellipses. When the secondary battery cell is prismatic, the fracture region may be formed into a rectangular shape corresponding to the prismatic shape.

Furthermore, as in battery pack 300 according to Embodiment 3 illustrated in Fig. 14, fracture region 33C in the form of a large number of dots may be used. Each of the dots is a thin part.

The thickness of the thin part constituting fracture region 33 is set according to the material, thickness, etc., of partition 32, the capacity of the secondary battery cells to be used, and other specifications. The average thickness of fracture region 33 is preferably 20% to 60% of the thickness of the partition 32. When the thickness of partition 32 is 1.5 mm, the average thickness of fracture region 33 is from 0.1 mm to 1 mm and preferably from 0.3 mm to 0.5 mm.

In the example described above, fracture region 33 is formed by reducing the thickness of a part of partition 32, but the present invention is not limited to this configuration; for example, entire partition 32 can be made thin when partition 32 can offer sufficient insulation and shaping thereof is possible in terms of size.

In the above example, the battery pack is mounted on an electrical device to be driven and supplies electric power to the electrical device. When the remaining capacity of the battery pack is low or when the battery pack degrades over time, the battery pack can be replaced to allow continuous use of the electrical device. Note that the present invention is not limited to a replaceable battery pack in which a secondary battery cell is mainly stored, and the present invention is also applicable to an embodiment in which a secondary battery cell is stored in the casing of an electrical device. The battery pack according to the present disclosure refers to those in which, as the minimum standard, a secondary battery cell is stored in a casing and thus examples of the battery pack include those in which a secondary battery cell for driving is embedded in the casing of an electrical device itself. In other words, the present invention can be applied not only to a replaceable battery pack, but also to an electrical device in which a secondary battery cell is embedded.

### Industrial Applicability

The battery pack according to the present invention can be suitably used as a power supply for driving movable bodies such as an electric cart and an electric scooter. The battery pack according to the present invention can also be used, as appropriate, as a power supply for radios and a power supply for portable electrical devices such as an electric cleaner and an electric tool, for example.

### Reference Signs List

- 100, 100', 200, 300, 700: battery pack
- 1: secondary battery cell
- 2: battery module
- 3: circuit board
- 10: outer covering case
- 11: upper case
- 12: lower case
- 14: gas exhaust hole
- 20: battery block
- 20A: first battery block
- 20B: second battery block
- 30: spacer
- 31A: first space
- 31B: second space
- 32: partition
- 33, 33B, 33C: fracture region
- 34: gas guiding path
- 35: side wall
- 36: positioning protrusion
- 701: secondary battery cell
- 720A: upper battery block
- 720B: lower battery block
- 730: spacer
- 731A: upper battery block gas duct
- 731B: lower battery block gas duct

## Claims

1. A battery pack comprising:
a first battery block and a second battery block each including a plurality of secondary battery cells;
a spacer disposed between the first battery block and the second battery block stacked; and
an outer covering case that stores the first battery block, the second battery block, and the spacer, wherein
the spacer separates the first battery block and the second battery block from each other and includes a partition that defines a first space facing the first battery block and a second space facing the second battery block, and
the partition includes fracture regions at least in regions facing the plurality of secondary battery cells.

2. The battery pack according to claim 1, wherein
a positioning protrusion that abuts the first battery block and a positioning protrusion that abuts the secondary battery block are integrally formed on an inner surface of a side wall of the spacer.

3. The battery pack according to claim 1, wherein
an outer covering can of each of the plurality of secondary battery cells is cylindrical, and a safety valve is provided on one end surface of the outer covering can that is cylindrical, and
each of the fracture regions is configured to, when the safety valve opens and a high-temperature gas is released, fracture due to the high-temperature gas to cause penetration of the partition.

4. The battery pack according to claim 3, wherein
the fracture region is formed by reducing a thickness of a region of the partition that faces the secondary battery cell.

5. The battery pack according to claim 4, wherein
an end surface of the secondary battery cell included in the first battery block and an end surface of the secondary battery cell included in the secondary battery block are arranged facing each other with the spacer therebetween.

6. The battery pack according to claim 5, wherein
the safety valve is provided on one of the end surface of the secondary battery cell in the first battery block and the end surface of the secondary battery cell in the secondary battery block that face each other with the spacer therebetween.

7. The battery pack according to claim 6, wherein
one of the end surface of the secondary battery cell in the first battery block and the end surface of the secondary battery cell in the secondary battery block that face each other with the spacer therebetween is a positive electrode, and the other is a negative electrode.

8. The battery pack according to any one of claims 1 to 7, wherein
each of the fracture regions is circular.

9. The battery pack according to any one of claims 1 to 7, wherein
each of the fracture regions is from 0.1 mm to 1 mm in thickness.

10. The battery pack according to any one of claims 1 to 7, wherein
the partition is formed to make a height of the first space and a height of the second space substantially equal.
